# EUROPÄISCHE PATENTSCHRIFT

(11) **EP 3 885 498 B1**
(45) Veröffentlichungstag und Bekanntmachung des Hinweises auf die Patenterteilung: **28.02.2024**
(21) Anmeldenummer: 21164307.7
(22) Anmeldetag: 23.03.2021
(51) Int. Cl.: E03C 1/02, H02G 3/06, H02G 3/08

(54) **SANITÄRE WANDEINBAU-ANSCHLUSSBOXEINHEIT MIT ELEKTRISCHER LEITUNGSDURCHFÜHRUNG**
SANITARY WALL CONNECTION BOX UNIT WITH AN ELECTRICAL CONDUIT FEEDTHROUGH
UNITÉ DE BOÎTIER DE RACCORDEMENT SANITAIRE À ENCASTRER AYANT UNE TRAVERSÉE DE CONDUITE ÉLECTRIQUE

(30) Priorität: 24.03.2020 DE 102020203800
(43) Veröffentlichungstag der Anmeldung: 29.09.2021
(73) Patentinhaber: Hansgrohe SE, 77761 Schiltach (DE)
(72) Erfinder: Blattner, Joachim, 77716 Haslach (DE); Schorer, Jürgen, 77761 Schiltach (DE); Lehmann, Günther, 77709 Oberwolfach (DE); Doll, Thomas, 77704 Oberkirch (DE); Stephan, Philip, 77866 Rheinau (DE); Heizmann, Christoph, 77709 Wolfach (DE); Krämer, Marika, 77716 Hofstetten (DE)
(74) Vertreter: Patentanwälte Ruff, Wilhelm, Beier, Dauster & Partner mbB

(56) Entgegenhaltungen:
- EP-A1- 3 486 380
- EP-B1- 2 468 966
- DE-B4-102014 208 291

## Beschreibung

Die Erfindung bezieht sich auf eine sanitäre Wandeinbau-Anschlussboxeinheit, die einen Boxgehäusekörper mit einem rückseitigen Basisabschnitt und einem vom Basisabschnitt nach vorn vorstehenden Hülsenabschnitt sowie einen am Basisabschnitt des Boxgehäusekörpers angeordneten Anschlusskörper umfasst. Der Hülsenabschnitt umgibt umfangsseitig einen Sanitärkomponenten-Aufnahmeraum, der über ein offenes vorderes Stirnende des Hülsenabschnitts zugänglich ist,. Der Anschlusskörper beinhaltet eine dem Sanitärkomponenten-Aufnahmeraum zugewandte Sanitärkomponenten-Anschlusskontur, eine an einer Außenseite des Boxgehäusekörpers zugängliche Fluidleitungs-Anschlussschnittstellenstruktur, eine Fluidkanalstruktur zur Fluidverbindung der Fluidleitungs-Anschlussschnittstellenstruktur mit der Sanitärkomponenten-Anschlusskontur und mindestens eine von einer Außenseite des Anschlusskörpers durch den Anschlusskörper hindurch zum Sanitärkomponenten-Aufnahmeraum führende elektrische Leitungsdurchführungsöffnung.

Solche und ähnliche Anschlussboxeinheiten werden typischerweise zum Anschließen von Sanitärkomponenten wie Wasserauslaufarmaturen für Waschtische, Badewannen, Duschbrausen oder Küchenspülen oder solchen Armaturen vorgelagerten sanitären Thermostat-, Mischer- und/oder Absperrventileinheiten an gebäudeseitig vorinstallierte Wasserleitungsanschlüsse verwendet. Typisch sind hierbei vor allem Unterputz-Ausführungen, bei denen die Wandeinbau-Anschlussboxeinheit derart in die betreffende Gebäudewand eingebaut wird, dass sie vorderseitig möglichst bündig mit der fertiggestellten Gebäudewandfläche, z.B. einer verputzten Wandfläche oder einer Fliesenwandfläche, abschließt. Es versteht sich, dass die Gebäudewand hierbei sowohl eine vertikale Gebäudewand im engeren Sinn als auch eine Bodenwand bzw. Bodenfläche oder eine Deckenwand bzw. Deckenfläche eines Gebäudes bzw. Zimmers sein kann, z.B. eines Duschraums, eines Badezimmers, eines Toilettenraums, einer Küche etc.

Die Fluidleitungs-Anschlussschnittstellenstruktur beinhaltet typischerweise eine oder mehrere Anschlusschnittstellen, insbesondere in Form entsprechender Rohrleitungs-Anschlussstutzen, zum Ankoppeln an je einen korrespondierenden gebäudeseitigen Rohrleitungs-Anschlussstutzen z.B. für Kaltwasser, Warmwasser oder aus Kaltwasser und Warmwasser gemischtes Mischwasser. Die Sanitärkomponenten-Anschlusskontur des Anschlusskörpers ist dafür eingerichtet, mit einer korrespondierenden Anschlusskontur einer anzukoppelnden Sanitärkomponente, wie einer Misch- und/oder Absperrventileinheit oder einer Wasserauslaufarmatur, zusammenzuwirken. Die Fluidkanalstruktur sorgt für die erforderliche Fluidverbindung zwischen der boxaußenseitigen Fluidleitungs-Anschlussschnittstellenkontur und der boxinnenseitigen Sanitärkomponenten-Anschlusskontur und besitzt dazu entsprechend einen oder mehrere Fluidkanäle, welche die jeweilige außenseitige Anschlussschnittstelle mit der Sanitärkomponenten-Anschlusskontur im Sanitärkomponenten-Aufnahmeraum verbinden.

Die Anschlussboxeinheit wird mit ihrer Rückseite bzw. einem rückseitigen Boden voraus in eine Gebäudewandöffnung eingesetzt oder an einer Gebäudewand, z.B. einer im Trockenbau erstellten Wand, platziert, wobei die benötigten Fluidverbindungen zwischen den gebäudeseitigen Anschlüssen einerseits und der Anschlussschnittstellenstruktur des Anschlusskörpers andererseits hergestellt werden. Nach Fertigstellung der Wand kann dann über das offene vordere Stirnende des Boxgehäusekörpers eine zugehörige Sanitärkomponente in den Aufnahmeraum des Boxgehäusekörpers eingebracht und an die passende Anschlusskontur des Anschlusskörpers angekoppelt werden.

Die elektrische Leitungsdurchführungsöffnung dient dazu, eine elektrische Verbindungsleitung von außen durch den Anschlusskörper hindurch zu einem elektrischen Anschluss einer in den Sanitärkomponenten-Aufnahmeraum eingebrachten Einbaukomponente zu führen, die eine elektrische Funktionalität besitzt. Die Einbaukomponente kann insbesondere eine Sanitärkomponente mit elektrischer Zusatzfunktion, z.B. ein Sanitärventil mit elektrischer Ansteuerung oder dgl., oder eine elektrische Komponente ohne Fluidführungsfunktion sein, z.B. ein elektrischer Sensor zur Temperatur- oder Durchflussmessung etc. Dabei kann es sich bei der elektrischen Leitung z.B. um eine elektrische Versorgungsleitung, über welche die betreffende Sanitärkomponente mit elektrischer Energie versorgt wird, und/oder um eine elektrische Signalverbindung handeln, über die z.B. Sensorsignale, Steuersignale etc. übertragen werden. Unter dem Begriff elektrische Leitung ist hierbei vorliegend in allgemeinem Sinn jegliche drahtgebundene elektrische Verbindung zu verstehen, was insbesondere beliebige herkömmliche Leitungsanordnungen in Form eines oder mehrerer elektrischer Kabel und/oder nicht ummantelter elektrischer Leitungen umfasst.

Elektrische Leitungsdurchführungen durch Gehäusewände eines Boxgehäusekörpers einer sanitären Wandeinbau-Anschlussboxeinheit sind in verschiedenen Ausprägungen bekannt, wobei häufig eine fluiddichte Ausführung gewünscht ist. Dazu werden herkömmlich beispielsweise fluiddichte Anschlussmuffen verwendet, siehe die Offenlegungsschrift DE 10 2007 002 235 A1. Die Patentschrift DE 10 2009 012 838 B3 offenbart die Maßnahme, eine elektrische Kabeldurchführung zwischen einem Gehäusehauptteil und einem Gehäusenebenteil wasserdicht auszuführen, wobei im nicht vollständig wasserdicht ausgebildeten Gehäusehauptteil eine Sanitärarmaturkomponente und im wasserdicht ausgebildeten Gehäusenebenteil eine elektrische Spannungsversorgung untergebracht sind.

Die Offenlegungsschrift DE 10 2017 127 151 A1 offenbart eine sanitäre Wandeinbau-Anschlussboxeinheit der eingangs genannten Art. Bekannte Kabeldurchführungen durch eine Gehäusewand des Boxgehäusekörpers hindurch werden dort wegen fehlender Flüssigkeitsdichtheit des Boxgehäusekörpers gegenüber der Außenumgebung oder wegen des Aufwands für ein wasserdichtes Anschrauben eines elektrischen Kabels an die Gehäusewand als nachteilig bezeichnet, und als Abhilfe wird vorgeschlagen, einen der Fluidkanäle der Fluidkanalstruktur in Abweichung von dessen ursprünglicher Bestimmung nicht als fluidführenden Kanal zwischen der Fluidleitungs-Anschlussschnittstellenstruktur an der Außenseite des Boxgehäusekörpers und der Sanitärkomponenten-Anschlusskontur im Sanitärkomponenten-Aufnahmeraum zu nutzen, sondern als elektrische Leitungsdurchführungsöffnung. Eine zusätzliche, darauf speziell abgestellte Dichtung umgibt das durchgeführte Kabel und soll den Fluidkanal abdichten. Bei dieser Ausführung steht folglich zumindest ein Fluidkanal der Fluidkanalstruktur nicht mehr zur Fluidführung zur Verfügung.

Die Patentschrift DE 10 2014 208 291 B4 offenbart eine Vorrichtung zum Hindurchführen und Einspannen von elektrischen Kabeln z.B. bei Schaltschränken, die eine Platte aus elastischem Material mit einer Kabeldurchführungsbohrung, die von einer durchstoßbaren Membran aus dem elastischem Material bedeckt wird, und einen in die Platte eingebetteten harten Kern umfasst, der die Bohrung ringförmig umschließt.

Die Patentschrift EP 2 468 966 B1 offenbart einen Unterputz-Einbaukasten zur Unterbringung eines Mischmoduls zum Erzeugen von Mischwasser, wobei das Mischmodul elektrische Komponenten umfasst, weshalb der Unterputz-Einbaukasten mit Durchführungen für elektrische Kabel versehen ist.

Der Erfindung liegt als technisches Problem die Bereitstellung einer sanitären Wandeinbau-Anschlussboxeinheit der eingangs genannten Art zugrunde, die gegenüber dem oben erwähnten Stand der Technik insbesondere funktionelle Vorteile und/oder Vorteile hinsichtlich der elektrischen Leitungsdurchführung und/oder hinsichtlich Fertigungs- und/oder Montageaufwand bietet.

Die Erfindung löst dieses Problem durch die Bereitstellung einer sanitären Wandeinbau-Anschlussboxeinheit mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Bei der erfindungsgemäßen Anschlussboxeinheit ist der Basisabschnitt des Boxgehäusekörpers mindestens in einem an die elektrische Leitungsdurchführungsöffnung des Anschlusskörpers angrenzenden elektrischen Leitungsanschlussbereich aus einem abdichtend nachgiebigen Material gebildet, und die elektrische Leitungsdurchführungsöffnung des Anschlusskörpers ist außenseitig von einer Verschlussmembran aus dem abdichtend nachgiebigen Material des elektrischen Leitungsdurchführungsbereichs des Basisabschnitts abgedeckt.

Diese Maßnahme kombiniert in vorteilhafter Weise das Bereitstellen einer vorzugsweise fluiddichten elektrischen Leitungsdurchführung mit einer funktionell und hinsichtlich Fertigungs-/Montageaufwand günstigen Fertigung des Basisabschnitts des Boxgehäusekörpers aus abdichtend nachgiebigem Material zumindest in dessen an die elektrische Leitungsdurchführungsöffnung des Anschlusskörpers angrenzendem elektrischem Leitungsanschlussbereich. Die Fluidleitungs-Anschlussschnittstellenstruktur kann von der elektrischen Leitungsdurchführung freigehalten werden. Das abdichtend nachgiebige Material des Basisabschnitts in dessen elektrischem Leitungsanschlussbereich und ggf. auch in anderen Bereichen des Basisabschnitts, wenn der Basisabschnitt auch dort bzw. insgesamt aus dem abdichtend nachgiebigen Material gebildet ist, kann je nach Bedarf für weitere Einsatzzwecke genutzt werden. Die Verschlussmembran aus dem abdichtend nachgiebigen Material deckt die elektrische Leitungsdurchführungsöffnung des Anschlusskörpers zuverlässig ab. Um eine elektrische Leitung in die elektrische Leitungsdurchführungsöffnung des Anschlusskörpers einzubringen, kann das abdichtend nachgiebige Material der Verschlussmembran mit geringem Aufwand geeignet durchbrochen werden, wobei die Verschlussmembran im Übrigen ihre Abdeck- bzw. Verschlussfunktion weiterhin erfüllen kann.

In einer Weiterbildung der Erfindung beinhaltet die Anschlussboxeinheit eine elektrische Leitung, die durch einen in der Verschlussmembran gebildeten Membrandurchbruch hindurchgeführt ist, wobei das abdichtend nachgiebige Material der Verschlussmembran am Rand des Membrandurchbruchs abdichtend radial nach innen drückend gegen die elektrische Leitung anliegt. Dadurch kann mit vergleichsweise geringem Aufwand eine zuverlässige fluiddichte Abdichtung für die durchgeführte elektrische Leitung erzielt werden, ohne dass hierzu eigens eine separate Dichtung benötigt wird. In alternativen Ausführungen kann eine solche separate Dichtung zum Einsatz kommen oder die Durchführung der elektrischen Leitung nicht fluiddicht ausgeführt sein.

In einer Weiterbildung der Erfindung ist der Anschlusskörper ring- oder zylinderförmig gebildet, und die elektrische Leitungsdurchführungsöffnung erstreckt sich umfangsseitig durch den Anschlusskörper hindurch in radialer Richtung oder mit radialer Hauptrichtungskomponente. Dies stellt eine für viele Anwendungen günstige Gestaltung des Anschlusskörpers und Zuführungsmöglichkeit für eine elektrische Leitung dar. Mit Hauptrichtungskomponente ist dabei wie üblich gemeint, dass sich eine Längsachse der Leitungsdurchführungsöffnung mit größerer radialer Richtungskomponente und dagegen kleinerer Richtungskomponente senkrecht dazu, d.h. in Umfangs-/Axialrichtung, erstreckt. Die Ring-/Zylinderform des Anschlusskörpers kann allgemein von einem beliebigen Querschnitt sein, insbesondere kreisförmig, oval oder polygonal. Es kann sich um eine umfangsseitig geschlossene oder offene Ring-/Zylinderform handeln. In alternativen Ausführungen besitzt der Anschlusskörper eine andere Form, und/oder die elektrische Leitungsdurchführungsöffnung erstreckt sich mit axialer und/oder umfangsseitiger Hauptrichtungskomponente durch den Anschlusskörper hindurch.

In einer Ausgestaltung der Erfindung umfasst die Fluidleitungs-Anschlussschnittstellenstruktur eine Mehrzahl von am Anschlusskörper umfangsseitig angeordneten Fluidleitungs-Anschlussschnittstellen, und die Fluidkanalstruktur beinhaltet eine Mehrzahl zugehöriger Fluidkanäle zwischen der jeweiligen Fluidleitungs-Anschlussschnittstelle und der Sanitärkomponenten-Anschlusskontur. Die elektrische Leitungsdurchführungsöffnung ist umfangsseitig zwischen zwei der Fluidkanalstrukturen angeordnet, oder der Anschlusskörper weist eine Mehrzahl von elektrischen Leitungsdurchführungsöffnungen auf, von denen mindestens eine zwischen zwei der Fluidkanalstrukturen angeordnet ist.

Damit stellt der Anschlusskörper in einer vorteilhaften Konfiguration, die zudem eine relativ kompakte Bauform für den Anschlusskörper zulässt, sowohl die jeweils benötigten Fluidleitungsanschlüsse und Fluiddurchführungen als auch die eine oder mehreren benötigten elektrischen Leitungsdurchführungen zur Verfügung. Die Leitungsdurchführungen können z.B. in Umfangsrichtung alternierend zu den Fluiddurchführungen, d.h. zu den Fluidkanälen, angeordnet sein, alternativ können die Fluidkanäle und die elektrischen Leitungsdurchführungen in Umfangsrichtung in einer anderen Abfolge angeordnet sein, z.B. auf einer Umfangshälfte nur die Fluidkanäle und auf der anderen Umfangshälfte nur die eine oder mehreren elektrischen Leitungsdurchführungen.

In einer Weiterbildung der Erfindung weist der Basisabschnitt des Boxgehäusekörpers in dem elektrischen Leitungsanschlussbereich eine außenseitige, sacklochförmige Rohreinsteckstutzenöffnung in dem abdichtend nachgiebigen Material auf, wobei die Rohreinsteckstutzenöffnung in Längsrichtung mit der elektrischen Leitungsdurchführungsöffnung des Anschlusskörpers überlappt und die Verschlussmembran einen Bodenbereich der Rohreinsteckstutzenöffnung bildet.

Dadurch wird mit geringem Aufwand die Möglichkeit geschaffen, ein Rohr in das abdichtend nachgiebige Material im elektrischen Leitungsanschlussbereich des Basisabschnitts des Boxgehäusekörpers von außen einstecken und an diesem halten zu können. Je nach Bedarf kann ein solches Rohr unterschiedlichen Zwecken dienen, z.B. zur Führung einer elektrischen Leitung und/oder eines Fluids und/oder einer Lichtsignalleitung oder anderweitigen Lichtleitung. Bei Vorhandensein mehrerer elektrischer Leitungsdurchführungsöffnungen kann nur einer von diesen oder mehreren von diesen bis hin zu allen jeweils eine solche Rohreinsteckstutzenöffnung zugeordnet sein. In alternativen Ausführungen ist keine solche Rohreinsteckstutzenöffnung am Basisabschnitt des Boxgehäusekörpers ausgebildet.

In einer Ausgestaltung der Erfindung ist die Rohreinsteckstutzenöffnung koaxial, d.h. mit zusammenfallenden Längsachsen, zu der elektrischen Leitungsdurchführungsöffnung des Anschlusskörpers angeordnet. Dies stellt eine für viele Anwendungen optimale Orientierung der Rohreinsteckstutzenöffnung dar, wobei die Rohreinsteckstutzenöffnung je nach Bedarf einen größeren, kleineren oder gleich großen Öffnungsdurchmesser besitzen kann wie die zugeordnete elektrische Leitungsdurchführungsöffnung des Anschlusskörpers. In alternativen Ausführungen ist die Rohreinsteckstutzenöffnung z.B. mit schräg zur Längsachse der zugeordneten Leitungsdurchführungsöffnung orientierter Längsachse angeordnet.

In einer Ausgestaltung der Erfindung beinhaltet die Anschlussboxeinheit eine an einem Umfangsrand der Rohreinsteckstutzenöffnung gebildete, radial nach innen abstehende Rohrhaltewulststruktur aus dem abdichtend nachgiebigen Material. Die Rohrhaltewulststruktur kann vorteilhaft dazu beitragen, ein in die Rohreinsteckstutzenöffnung eingestecktes Rohr gegen unbeabsichtigtes Herausgelangen gesichert zu halten. Dazu kann sich das abdichtend nachgiebige Material der Rohrhaltewulststruktur radial gegen das eingesteckte Rohr anlegen und es z.B. mittels Reibschluss gegen Axialbewegung sichern. Die Rohrhaltewulststruktur kann z.B. eine oder mehrere voneinander axial beabstandete, umfangsseitig durchgehend oder unterbrochen verlaufende Haltewülste beinhalten. Alternativ wird das Rohr ohne derartige Wulststruktur eingesteckt gehalten, oder es sind andere herkömmliche Rohrhaltemittel vorgesehen, z.B. unter Verwendung einer Schraubverbindung, einer Rohrschelle oder dergleichen.

In einer Ausgestaltung der Erfindung beinhaltet die Anschlussboxeinheit ein Leitungsaufnahmerohr, das zum Aufnehmen einer elektrischen Leitung eingerichtet ist und mit einem boxseitigen Rohrende in die Rohreinsteckstutzenöffnung eingesteckt ist. Dies stellt eine zum Durchführen der elektrischen Leitung vorteilhafte Ausführung des in die Rohreinsteckstutzenöffnung eingesteckten Rohres dar. Bei dem Leitungsaufnahmerohr kann es sich insbesondere um ein in der elektrischen Installationstechnik übliches Leerrohr handeln, das zur Durchführung elektrischer Kabel oder anderer elektrischer Leitungen gedacht ist. In alternativen Ausführungen kann in die Rohreinsteckstutzenöffnung ein nur zu Fluidführungszwecken dienendes Rohr eingesteckt sein, um die elektrische Leitungsdurchführungsöffnung außer zum Durchführen einer elektrischen Leitung zusätzlich zum Durchführen eines Fluids zu nutzen, wobei die elektrische Leitung in diesem Fall neben bzw. außerhalb des Rohres der elektrischen Leitungsdurchführungsöffnung des Anschlusskörpers zugeführt wird.

In einer Weiterbildung der Erfindung besteht der Anschlusskörper aus einem gegenüber dem abdichtend nachgiebigen Material des elektrischen Leitungsdurchführungsbereichs des Basisabschnitts steiferen Kunststoff- oder Metallmaterial. Diese Materialwahl ist für viele Anwendungen in der Praxis von Vorteil. So kann der Anschlusskörper beispielsweise wie in vielen herkömmlichen Anwendungen aus Messing oder einem anderen in der Sanitärtechnik verwendeten Metallmaterial bestehen.

In einer Weiterbildung der Erfindung ist das abdichtend nachgiebige Material des elektrischen Leitungsdurchführungsbereichs des Basisabschnitts ein Kunststoffschaummaterial, bei dem es sich insbesondere um ein thermoplastisches Partikelschaummaterial, alternativ ein anderes herkömmliches Kunststoffschaummaterial, handeln kann. Dies stellt eine unter Fertigungs- und Montagegesichtspunkten sowie auch hinsichtlich der für den elektrischen Leitungsdurchführungsbereich des Basisabschnitts des Boxgehäusekörpers geforderten funktionellen Eigenschaften vorteilhafte Materialwahl dar. Beispielsweise kann es sich um ein Polypropylen-Schaummaterial, aber auch um ein Schaummaterial aus einem anderen Kunststoff handeln, das die geforderte Funktion der abdichtenden Nachgiebigkeit besitzt. In alternativen Ausführungen ist das abdichtend nachgiebige Material kein Schaummaterial, sondern z.B. ein Gummimaterial.

In einer Weiterbildung der Erfindung ist der Basisabschnitt insgesamt aus dem Kunststoffschaummaterial gebildet, und der Anschlusskörper ist in das Kunststoffschaummaterial des Basisabschnitts eingebettet. Dies stellt eine für viele Anwendungen vorteilhafte Ausführung des Basisabschnitts des Boxgehäusekörpers und Integration des Anschlusskörpers in den Basisabschnitt dar. Die Einbettung des Anschlusskörpers in das Kunststoffschaummaterial des Basisabschnitts hält den Anschlusskörper integral sicher im Basisabschnitt und stellt eine fertigungs- und montagetechnisch günstige Verbindung des Anschlusskörpers mit dem Basisabschnitt dar.

Die erfindungsgemäße Anschlussboxeinheit bietet sich zur Verwendung für ein entsprechendes Montage- bzw. Installationsverfahren als eines verfahrensmäßigen

Aspektes der Erfindung an. Gemäß diesem Verfahren wird zunächst die Anschlussboxeinheit am Installationsort angebracht, d.h. an der betreffenden Gebäudewand montiert bzw. in diese eingebaut, einschließlich Herstellen der gewünschten Fluidverbindungen, und die betreffende Sanitärkomponente wird in den Aufnahmeraum eingebracht, soweit nicht bereits dort vormontiert. Anschließend wird die Verschlussmembran geöffnet, z.B. mittels Durchstechen mit einem Stechwerkzeug. Danach wird die elektrische Leitung durch die Verschlussmembran und die Leitungsdurchführungsöffnung des Anschlusskörpers durchgeführt. Gegebenenfalls wird dabei auch das zugehörige Leitungsaufnahmerohr in die Rohreinsteckstutzenöffnung des Basisabschnitts des Boxgehäusekörpers eingesteckt, wobei das Durchführen der Leitung durch das Rohr und/oder durch die Verschlussmembran und die Leitungsdurchführungsöffnung hindurch je nach Anwendungsfall vor oder nach dem Einstecken des Rohrs in die Rohreinsteckstutzenöffnung erfolgen kann.

Vorteilhafte Ausführungsformen der Erfindung sind in den Zeichnungen dargestellt. Diese und weitere Ausführungsformen der Erfindung werden nachfolgend näher beschrieben. Hierbei zeigen:
- Fig. 1: eine perspektivische Explosionsansicht wesentlicher Teile einer exemplarischen Ausführung einer sanitären Wandeinbau-Anschlussboxeinheit mit Boxgehäusekörper und Anschlusskörper,
- Fig. 2: eine rückwärtige Querschnittansicht einer ersten Ausführungsvariante der Anschlussboxeinheit von Fig. 1 durch den Anschlusskörper und einen Basisabschnitt des Boxgehäusekörpers,
- Fig. 3: eine Draufsicht von vorn auf einer zweite Ausführungsvariante der Anschlussboxeinheit von Fig. 1 in teilweise weggebrochener Darstellung zur Sichtbarmachung einer elektrischen Leitung in einer Leitungsführung mit einem Leerrohr in nicht eingesteckter Position und
- Fig. 4: die Ansicht von Fig. 3 mit eingestecktem Leerrohr.

Die in den Figuren anhand exemplarischer Ausführungen dargestellte sanitäre Wandeinbau-Anschlussboxeinheit weist einen Boxgehäusekörper 1 mit einem rückseitigen Basisabschnitt 2 und einem vom Basisabschnitt 2 nach vorn abstehenden Hülsenabschnitt 3 sowie einen am Basisabschnitt 2 des Boxgehäusekörpers 1 angeordneten Anschlusskörper 6 auf. Der Hülsenabschnitt 3 umgibt umfangsseitig einen Sanitärkomponenten-Aufnahmeraum 4, der über ein offenes vorderes Stirnende 5 des Hülsenabschnitts 3 zugänglich ist. Der Anschlusskörper 6 weist eine dem Sanitärkomponenten-Aufnahmeraum 4 zugewandte Sanitärkomponenten-Anschlusskontur 7, eine an einer Außenseite 8 des Boxgehäusekörpers 1 zugängliche Fluidleitungs-Anschlussschnittstellenstruktur 9 und eine Fluidkanalstruktur 10 auf. Die Fluidkanalstruktur 10 sorgt für die benötigte Fluidverbindung der Fluidleitungs-Anschlussschnittstellenstruktur 9 mit der Sanitärkomponenten-Anschlusskontur 7.

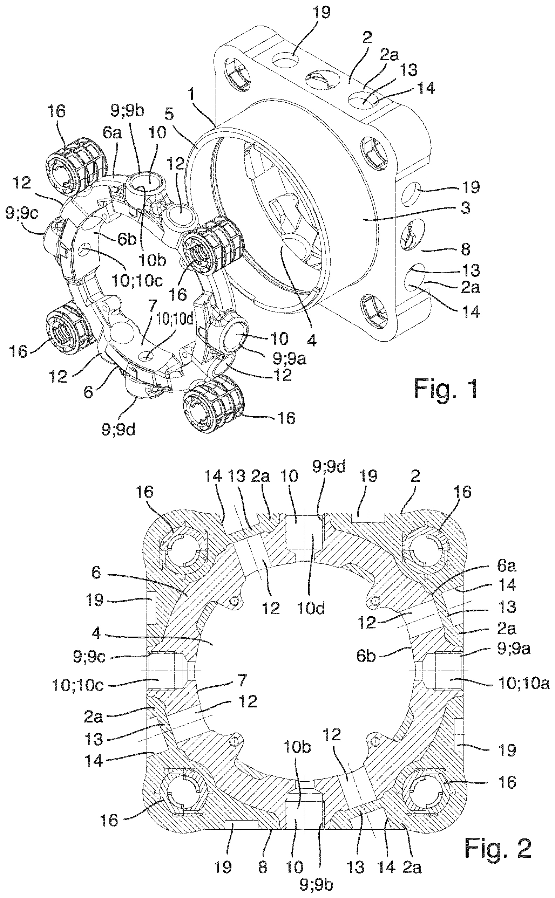

Des Weiteren beinhaltet der Anschlusskörper 6 mindestens eine elektrische Leitungsdurchführungsöffnung 12, die von einer Außenseite 6a des Anschlusskörpers 6 durch den Anschlusskörper 6 hindurch zum Sanitärkomponenten-Aufnahmeraum 4 an einer Innenseite 6b des Anschlusskörpers 6 führt, an der sich auch die Fluidleitungs-Anschlussschnittstellenstruktur 9 befindet. Der Basisabschnitt 2 des Boxgehäusekörpers 1 ist mindestens in einem an die elektrische Leitungsdurchführungsöffnung 12 des Anschlusskörpers 6 angrenzenden elektrischen Leitungsanschlussbereich 2a aus einem abdichtend nachgiebigen Material gebildet. Die elektrische Leitungsdurchführungsöffnung 12 des Anschlusskörpers 6 ist außenseitig von einer Verschlussmembran 13 aus dem abdichtend nachgiebigen Material des elektrischen Leitungsdurchführungsbereichs 2a des Basisabschnitts 2 abgedeckt, wie insbesondere aus den Fig. 2 bis 4 ersichtlich.

Im gezeigten Beispiel sind vier Leitungsdurchführungsöffnungen 12 vorhanden, die sich jeweils von der Außenseite 6a des Anschlusskörpers 6 zu dessen Innenseite 6b erstrecken. Die jeweilige Leitungsdurchführungsöffnung 12 kann beispielsweise zum Durchführen eines elektrischen Leitungskabels oder einer anderen elektrischen Leitung oder eines anderen langgestreckten Elements verwendet werden, wozu dann die Verschlussmembran 13 geeignet geöffnet wird. Wenn die Leitungsdurchführungsöffnung 12 im Anschlusskörper 6 hierfür nicht benötigt wird, bleibt sie unbelegt und durch die Verschlussmembran 13 abgedeckt.

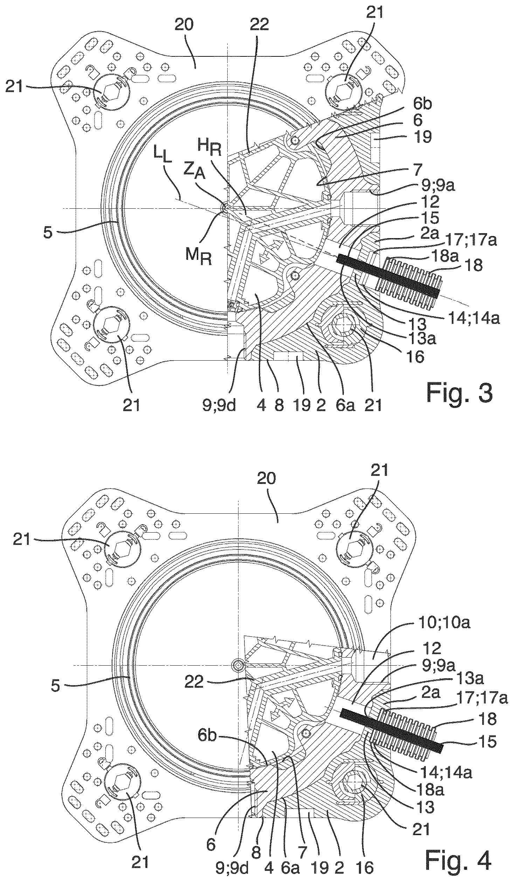

In entsprechend ergänzten Ausführungen beinhaltet die sanitäre Wandeinbau-Anschlussboxeinheit, wie in den Fig. 3 und 4 gezeigt, eine elektrische Leitung 15, die durch einen in der Verschlussmembran 13 gebildeten Membrandurchbruch 13a hindurchgeführt ist, wobei das abdichtend nachgiebige Material der Verschlussmembran 13 am Rand des Membrandurchbruchs 13a abdichtend radial nach innen drückend gegen die elektrische Leitung 15 anliegt. Dadurch kann die Durchführung der elektrischen Leitung 15 durch den Anschlusskörper 6 hindurch fluiddicht abgedichtet werden, ohne eine separate Dichtung zu benötigen. Die Verschlussmembran 13 wird zu diesem Zweck gerade so weit geöffnet, d.h. mit dem Membrandurchbruch 13a versehen, dass die elektrische Leitung 15 durch diese Öffnung durchgesteckt werden kann, wobei sie das abdichtend nachgiebige Membranmaterial etwas radial nach außen wegdrückt, so dass sich letzteres anschließend eng gegen den Außenumfang der elektrischen Leitung 15 anlegen kann.

Die Fig. 3 und 4 zeigen die Anschlussboxeinheit mit einer über das offene, vordere Stirnende 5 des Hülsenabschnitts 3 in den Aufnahmeraum 4 eingebrachten Sanitärkomponente 22 herkömmlicher Art, bei der es sich z.B. um eine Mischventil-Baugruppe, wie eine Thermostatventil-Baugruppe, und/oder eine Absperrventil-Baugruppe mit einem oder mehreren Misch- und/oder Absperrventilen handeln kann und die in den Fig. 3 und 4 in einem weggeschnittenen Bereich zu erkennen ist. Die Sanitärkomponente 22 schließt mit einer korrespondierenden Anschlusskontur an die Anschlusskontur 7 des Anschlusskörpers 6 an, so dass Einlass- und Auslassanschlüsse der Sanitärkomponente 22 in einer gewünschten Weise mit der Fluidkanalstruktur 10 des Anschlusskörpers 6 in Fluidverbindung stehen. Die Sanitärkomponente 22 besitzt eine oder mehrere elektrisch betriebene und/oder elektrische Signale bzw. Datensignale empfangende und/oder abgebende Elemente, z.B. einen Ventilstellmotor und/oder einen Ventilsstellungssensor und/oder einen Temperatursensor und/oder einen Durchflussmengensensor.

In entsprechenden Ausführungen ist der Anschlusskörper 6, wie im gezeigten Beispiel, ringförmig, in alternativen Ausführungen zylinderförmig oder mit einer anderen Formgebung, gebildet. Die elektrische Leitungsdurchführungsöffnung 12 erstreckt sich umfangsseitig durch den Anschlusskörper 6 hindurch in radialer Richtung oder, wie im gezeigten Beispiel, mit radialer Hauptrichtungskomponente H_{R}, d.h. die Richtungskomponente H_{R} einer Längsachse L_{L} der Leitungsdurchführungsöffnung 12 ist in radialer Richtung zu einem Mittelpunkt Z_{A} des ringförmigen Abschlusskörpers 6 größer als eine verbleibende, dazu senkrechte Richtungskomponente M_{R}, wie in Fig. 3 dargestellt. Im gezeigten Beispiel ist die Ringform des Anschlusskörpers 6 im Querschnitt kreisförmig, alternativ kann sie z.B. oval oder polygonal sein. Im gezeigten Beispiel ist die Ringform des Anschlusskörpers 6 umfangsseitig geschlossen, alternativ kann es eine umfangsseitig offene, sich über einen Umfangswinkel von weniger als 360° erstreckende Ringform sein.

In entsprechenden Ausführungsformen umfasst die Fluidleitungs-Anschlussschnittstellenstruktur 9 eine Mehrzahl von am Anschlusskörper 6 umfangsseitig angeordneten Fluidleitungs-Anschlussschnittstellen, und die Fluidkanalstruktur 10 weist eine Mehrzahl zugehöriger Fluidkanäle zwischen der jeweiligen Fluidleitungs-Anschlussschnittstelle und der Sanitärkomponenten-Anschlusskontur auf. Im gezeigten Beispiel beinhaltet die Fluidleitungs-Anschlussschnittstellenstruktur 9 vier Anschlussschnittstellen 9a, 9b, 9c, 9d, exemplarisch in Form von vier Anschlussstutzen, die im Umfangswinkelabstand von jeweils 90° versetzt angeordnet an der Außenseite 6a, im gezeigten Beispiel speziell einer Außenumfangsseite, des Anschlusskörpers 6 ausgebildet sind, und vier zugehörige Fluidkanäle 10a, 10b, 10c, 10d, die z.B. wie gezeigt in radialer Richtung des ringförmigen Anschlusskörpers 6 verlaufen. Die elektrische Leitungsdurchführungsöffnung 12 ist umfangsseitig, d.h. in Umfangsrichtung des Anschlusskörpers 6, zwischen zwei der Fluidkanäle 10a, 10b, 10c, 10d angeordnet. Speziell weist der Anschlusskörper 6 im gezeigten Beispiel eine Mehrzahl von elektrischen Leitungsdurchführungsöffnungen 12 auf, z.B. konkret vier, von denen mindestens eine zwischen zwei der Fluidkanäle angeordnet ist, z.B. konkret alle vier alternierend zu den vier Fluidkanälen 10a, 10b, 10c, 10d.

In entsprechenden Ausführungsformen beinhaltet der Basisabschnitt 2 des Boxgehäusekörpers 1 in dem elektrischen Leitungsanschlussbereich 2a, wie im gezeigten Beispiel, eine außenseitige, sacklochförmige Rohreinsteckstutzenöffnung 14 in dem abdichtend nachgiebigen Material, wobei die Rohreinsteckstutzenöffnung 14 in Längsrichtung mit der elektrischen Leitungsdurchführungsöffnung 12 des Anschlusskörpers 6 überlappt und die Verschlussmembran 13 einen Bodenbereich der Rohreinsteckstutzenöffnung 14 bildet. Vorzugsweise ist die Rohreinsteckstutzenöffnung 14, wie im gezeigten Beispiel, koaxial zu der elektrischen Leitungsdurchführungsöffnung 12 des Anschlusskörpers 6 angeordnet, alternativ kann sie schräg oder parallel zu dieser versetzt angeordnet sein.

In entsprechenden Realisierungen besitzt die koaxial angeordnete Rohreinsteckstutzenöffnung 14, wie im gezeigten Beispiel, einen größeren oder zumindest gleich großen Durchmesser wie die elektrische Leitungsdurchführungsöffnung 12, so dass die Leitungsdurchführungsöffnung 12 in Längsrichtung vollständig mit der Rohreinsteckstutzenöffnung 14 überlappt. In alternativen Ausführungen kann die Überlappung auch lediglich partiell sein, wobei es im Allgemeinen günstig ist, wenn die Überlappung so groß ist, dass die elektrische Leitung 15 im Überlappungsbereich geradlinig ohne Abknickungen geführt werden kann.

In vorteilhaften Ausführungsformen beinhaltet die Anschlussboxeinheit eine an einem Umfangsrand 14b der Rohreinsteckstutzenöffnung 14 gebildete, radial nach innen abstehende Rohrhaltewulststruktur 17 aus dem abdichtend nachgiebigen Material. Die Fig. 3 und 4 zeigen eine entsprechende Ausführung, bei der die jeweilige Rohrhaltewulststruktur 17 eine einzelne Haltewulst 17a beinhaltet. In alternativen Realisierungen kann die Rohrhaltewulststruktur 17 z.B. mehrere, voneinander axial beabstandete Rohrhaltewülste umfassen. Im gezeigten Beispiel erstreckt sich die Haltewulst 17a umfangsseitig durchgehend, in alternativen Realisierungen kann die jeweilige Haltewulst 17a umfangsseitig unterbrochen und/oder in axialer Richtung oder kombiniert in axialer Richtung und Umfangsrichtung verlaufen. Fig. 2 zeigt eine Ausführung ohne derartige Rohrhaltewulststruktur. Dennoch kann auch in diesem Fall bei Bedarf ein eingestecktes Rohr gegen unbeabsichtigtes Herausgelangen gesichert sein, z.B. indem das Rohr einen etwas größeren Außendurchmesser als ein Innendurchmesser der Rohreinsteckstutzenöffnung 14 besitzt, so dass das abdichtend nachgiebige Material des Randes der Rohreinsteckstutzenöffnung 14 radial nach innen gegen die Außenseite des eingesteckten Rohrs andrückt und dieses mittels Reibschluss festhält.

In vorteilhaften Ausführungsformen beinhaltet die Anschlussboxeinheit, wie im gezeigten Beispiel, ein Leitungsaufnahmerohr 18, das zum Aufnehmen einer elektrischen Leitung eingerichtet ist und mit einem boxseitigen Rohrende 18a in die Rohreinsteckstutzenöffnung 14 eingesteckt ist. Speziell kann es sich hierbei um ein Leerrohr handeln, das zur Durchführung elektrischer Kabel oder anderer elektrischer Leitungen gedacht ist. Fig. 3 zeigt eine Situation, bei der das Rohr 18 mit seinem Rohrende 18a noch nicht in die Rohreinsteckstutzenöffnung 14 eingesteckt ist, so dass die Haltewulst 17a noch gut zu erkennen ist. Fig. 4 zeigt die fertig montierte Situation mit komplett in die Rohreinsteckstutzenöffnung 14 eingestecktem Rohrende 18a. Durch die Rohrhaltewulststruktur 17 ist das Rohr 18 mit seinem Rohrende 18a gegen unbeabsichtigtes Herausgelangen gesichert in der Rohreinsteckstutzenöffnung 14 gehalten. Dazu legt sich das abdichtend nachgiebige Material der Rohrhaltewulststruktur 17 radial außen gegen das eingesteckte Rohrende 18a an und sichert es z.B. primär durch Reibschluss gegen axiales Herausbewegen.

In entsprechenden Ausführungen besteht der Anschlusskörper 6 aus einem gegenüber dem abdichtend nachgiebigen Material des elektrischen Leitungsdurchführungsbereichs 2a des Basisabschnitts 2 steiferen Kunststoff- oder Metallmaterial, z.B. aus einem Messingmaterial oder einem anderen Metallmaterial.

In entsprechenden Ausführungen ist das abdichtend nachgiebige Material des elektrischen Leitungsdurchführungsbereichs 2a des Basisabschnitts 2 ein Kunststoffschaummaterial. Vorzugsweise handelt es sich um ein thermoplastisches Partikelschaummaterial, das die geforderte Funktion der abdichtenden Nachgiebigkeit besitzt, wie ein Polypropylen-Schaummaterial.

In vorteilhaften Ausführungsformen ist der Basisabschnitt 2 des Boxgehäusekörpers 1 insgesamt aus dem Kunststoffschaummaterial gebildet, und der Anschlusskörper 6 ist in das Kunststoffschaummaterial des Basisabschnitts 2 eingebettet, wie im gezeigten Beispiel realisiert. Konkret ist der Anschlusskörper 6 hierbei im gezeigten Beispiel sowohl außenumfangsseitig als auch rückseitig und in einem vorderseitigen Randbereich von angrenzendem Kunststoffschaummaterial des Basisabschnitts 2 mit Berührkontakt umgeben. Dies gewährleistet eine zuverlässige Abdichtung zwischen dem Anschlusskörper 6 und dem Basisabschnitt 2 bzw. dem Boxgehäusekörper 1 in diesem Bereich. In der Explosionsansicht von Fig. 1 ist der Anschlusskörper 6 aus seiner Einbettung im Boxgehäusekörper 1 herausgenommen gezeigt, so dass seine Kontur deutlicher erkennbar ist.

Zusätzlich kann die Herstellung des Basisabschnitts 2 bzw. des Boxgehäusekörpers 1 aus dem Kunststoffschaummaterial oder allgemein dem abdichtend nachgiebigen Material dazu genutzt werden, wie gezeigt eine oder mehrere Libellenaufnahmeöffnungen 19 als jeweiliges Sackloch in diesem Material am Außenumfang des Basisabschnitts 2 auszubilden, in die eine übliche Dosenlibelle oder dgl. als Ausrichthilfe bei der Montage der Anschlussboxeinheit eingesteckt werden kann.

In entsprechenden Ausführungen ist in das Kunststoffschaummaterial des Basisabschnitts 2 des Boxgehäusekörpers 1, wie beim gezeigten Beispiel, mindestens ein Verbindungsstrukturelement 16 eingebettet. Das Verbindungsstrukturelement 16 weist eine Verbindungsstruktur auf, die mit einem Verbindungskörper 21 zusammenwirkt, mit dem ein Funktionsflächenkörper 20 am Basisabschnitt 2 gehalten werden kann, der eine Funktionsfläche radial außerhalb des Hülsenabschnitts 3 bereitstellt. Diese Funktionsfläche kann insbesondere als Befestigungs- und/oder Dichtfläche genutzt werden, um den Boxgehäusekörper 1 an einer gebäudeseitigen Wandfläche zu befestigen und/oder gegenüber einer gebäudeseitigen Wandfläche abzudichten.

Im gezeigten Ausführungsbeispiel sind speziell vier solche Verbindungsstrukturelemente 16 in das Kunststoffschaummaterial des Basisabschnitts 2 eingebettet, z.B. wie gezeigt jeweils um 90° in Umfangswinkelrichtung gegeneinander versetzt in Eckbereichen des in diesem Beispiel viereckförmigen Basisabschnitts 2. Jedes dieser Verbindungsstrukturelemente 16 ist als ein Hülsenelement mit einer Bolzenaufnahmeöffnung ausgebildet und erstreckt sich zwischen einer Vorderseite und einer Rückseite des Basisabschnitts 2 durchgehend durch den Basisabschnitt 2 hindurch. Passend dazu kann der jeweilige Verbindungskörper 21 als ein in die Bolzenaufnahmeöffnung einsteckbarer und in dieser vorzugsweise lösbar festlegbarer Verbindungsbolzen realisiert sein. In alternativen Ausführungen sind nur eins, zwei, drei oder mehr als vier solche Verbindungsstrukturelemente 16 in das Kunststoffschaummaterial des Basisabschnitts 2 eingebettet, und/oder es sind ein oder mehrere solche Verbindungsstrukturelemente 16 in einer anderen Verteilung bzw. in anderen Bereichen des Basisabschnitts 2 angeordnet, oder die Anschlussboxeinheit ist ohne derartige Verbindungsstrukturelemente gebildet.

Wie die gezeigten und die weiteren oben erläuterten Ausführungsbeispiele deutlich machen, stellt die Erfindung eine Wandeinbau-Anschlussboxeinheit zur Verfügung, die Vorteile insbesondere hinsichtlich der Zuführung von elektrischen Leitungen von außerhalb der Anschlussboxeinheit in das Innere des Boxgehäusekörpers und speziell in den Bereich des Sanitärkomponenten-Aufnahmeraums bzw. zu einer dort angeordneten elektrischen Funktionskomponente bietet.

## Patentansprüche

1. Sanitäre Wandeinbau-Anschlussboxeinheit mit
- einem Boxgehäusekörper (1) mit einem rückseitigen Basisabschnitt (2) und einem vom Basisabschnitt nach vorn vorstehenden Hülsenabschnitt (3), der umfangsseitig einen Sanitärkomponenten-Aufnahmeraum (4) umgibt, der über ein offenes vorderes Stirnende (5) des Hülsenabschnitts zugänglich ist, und
- einem am Basisabschnitt des Boxgehäusekörpers angeordneten Anschlusskörper (6), der eine dem Sanitärkomponenten-Aufnahmeraum zugewandte Sanitärkomponenten-Anschlusskontur (7), eine an einer Außenseite (8) des Boxgehäusekörpers zugängliche Fluidleitungs-Anschlussschnittstellenstruktur (9), eine Fluidkanalstruktur (10) zur Fluidverbindung der Fluidleitungs-Anschlussschnittstellenstruktur mit der Sanitärkomponenten-Anschlusskontur und mindestens eine von einer Außenseite (6a) des Anschlusskörpers durch den Anschlusskörper hindurch zum Sanitärkomponenten-Aufnahmeraum führende elektrische Leitungsdurchführungsöffnung (12) aufweist,
**dadurch gekennzeichnet, dass**
- der Basisabschnitt (2) des Boxgehäusekörpers (1) mindestens in einem an die elektrische Leitungsdurchführungsöffnung des Anschlusskörpers angrenzenden elektrischen Leitungsanschlussbereich (2a) aus einem abdichtend nachgiebigen Material gebildet ist und
- die elektrische Leitungsdurchführungsöffnung (12) des Anschlusskörpers (6) außenseitig von einer Verschlussmembran (13) aus dem abdichtend nachgiebigen Material des elektrischen Leitungsdurchführungsbereichs des Basisabschnitts (2) abgedeckt ist.

2. Sanitäre Wandeinbau-Anschlussboxeinheit nach Anspruch 1, weiter **gekennzeichnet durch** eine elektrische Leitung (15), die durch einen in der Verschlussmembran gebildeten Membrandurchbruch (13a) hindurchgeführt ist, wobei das abdichtend nachgiebige Material der Verschlussmembran am Rand des Membrandurchbruchs abdichtend radial nach innen drückend gegen die elektrische Leitung anliegt.

3. Sanitäre Wandeinbau-Anschlussboxeinheit nach Anspruch 1 oder 2, weiter **dadurch gekennzeichnet, dass** der Anschlusskörper ring- oder zylinderförmig gebildet ist und sich die elektrische Leitungsdurchführungsöffnung umfangsseitig durch den Anschlusskörper hindurch in radialer Richtung oder mit radialer Hauptrichtungskomponente (H_{R}) erstreckt.

4. Sanitäre Wandeinbau-Anschlussboxeinheit nach Anspruch 3, weiter **dadurch gekennzeichnet, dass**
- die Fluidleitungs-Anschlussschnittstellenstruktur eine Mehrzahl von am Anschlusskörper umfangsseitig angeordneten Fluidleitungs-Anschlussschnittstellen (9a, 9b, 9c, 9d) und die Fluidkanalstruktur eine Mehrzahl zugehöriger Fluidkanäle (10a, 10b, 10c, 10d) zwischen der jeweiligen Fluidleitungs-Anschlussschnittstelle und der Sanitärkomponenten-Anschlusskontur umfasst und
- die elektrische Leitungsdurchführungsöffnung umfangsseitig zwischen zwei der Fluidkanäle angeordnet ist oder der Anschlusskörper eine Mehrzahl von elektrischen Leitungsdurchführungsöffnungen aufweist, von denen mindestens eine zwischen zwei der Fluidkanäle angeordnet ist.

5. Sanitäre Wandeinbau-Anschlussboxeinheit nach Anspruch 4, weiter **dadurch gekennzeichnet, dass** der Basisabschnitt des Boxgehäusekörpers in dem elektrischen Leitungsanschlussbereich eine außenseitige, sacklochförmige Rohreinsteckstutzenöffnung (14) in dem abdichtend nachgiebigen Material aufweist, wobei die Rohreinsteckstutzenöffnung in Längsrichtung mit der elektrischen Leitungsdurchführungsöffnung des Anschlusskörpers überlappt und die Verschlussmembran einen Bodenbereich der Rohreinsteckstutzenöffnung bildet.

6. Sanitäre Wandeinbau-Anschlussboxeinheit nach Anspruch 5, weiter **dadurch gekennzeichnet, dass** die Rohreinsteckstutzenöffnung koaxial zu der elektrischen Leitungsdurchführungsöffnung des Anschlusskörpers angeordnet ist.

7. Sanitäre Wandeinbau-Anschlussboxeinheit nach Anspruch 5 oder 6, weiter **gekennzeichnet durch** eine an einem Umfangsrand (14a) der Rohreinsteckstutzenöffnung gebildete, radial nach innen abstehende Rohrhaltewulststruktur (17) aus dem abdichtend nachgiebigen Material.

8. Sanitäre Wandeinbau-Anschlussboxeinheit nach einem der Ansprüche 1 bis 7, weiter **gekennzeichnet durch** ein Leitungsaufnahmerohr (18), das zum Aufnehmen einer elektrischen Leitung eingerichtet ist und mit einem boxseitigen Rohrende (18a) in die Rohreinsteckstutzenöffnung eingesteckt ist.

9. Sanitäre Wandeinbau-Anschlussboxeinheit nach einem der Ansprüche 1 bis 8, weiter **dadurch gekennzeichnet, dass** der Anschlusskörper aus einem gegenüber dem abdichtend nachgiebigen Material des elektrischen Leitungsdurchführungsbereichs des Basisabschnitts steiferen Kunststoff- oder Metallmaterial besteht.

10. Sanitäre Wandeinbau-Anschlussboxeinheit nach einem der Ansprüche 1 bis 9, weiter **dadurch gekennzeichnet, dass** das abdichtend nachgiebige Material des elektrischen Leitungsdurchführungsbereichs des Basisabschnitts ein Kunststoffschaummaterial, insbesondere ein thermoplastisches Partikelschaummaterial, ist.

11. Sanitäre Wandeinbau-Anschlussboxeinheit nach einem der Ansprüche 1 bis 10, weiter **dadurch gekennzeichnet, dass** der Basisabschnitt insgesamt aus dem Kunststoffschaummaterial gebildet ist und der Anschlusskörper in das Kunststoffschaummaterial des Basisabschnitts eingebettet ist.

## Claims

1. Sanitary wall installation connection box unit, comprising
- a box housing body (1) having a rear-side base portion (2) and a sleeve portion (3) projecting forward from the base portion, which sleeve portion peripherally surrounds a sanitary component mounting space (4), which space is accessible via an open front end face (5) of the sleeve portion, and
- a connector body (6) disposed on the base portion of the box housing body, which connector body comprises a sanitary component connection contour (7) facing the sanitary component mounting space, a fluid line connection interface structure (9) accessible on an outer side (8) of the box housing body, a fluid conduit structure (10) for fluid connection of the fluid line connection interface structure to the sanitary component connection contour, and at least one electric line feed-through opening (12) leading from an outer side (6a) of the connector body through the connector body to the sanitary component mounting space,
**characterized in that**
- the base portion (2) of the box housing body (1) is made of a sealing resilient material at least in an electric line connection region (2a) adjacent to the electric line feed-through opening of the connector body, and
- the electric line feed-through opening (12) of the connector body (6) is covered on an outer side by a closure membrane (13) made of the sealing resilient material of the electric line feed-through region of the base portion (2).

2. Sanitary wall installation connection box unit according to claim 1, further **characterized by** an electric line (15) which is fed through a membrane aperture (13a) formed in the closure membrane, wherein the sealing resilient material of the closure membrane rests sealingly on the edge of the membrane aperture pressing radially inwards against the electric line.

3. Sanitary wall installation connection box unit according to claim 1 or 2, further **characterized in that** the connector body has an annular or cylindrical shape and the electric line feed-through opening extends peripherally through the connector body in radial direction or with a radial main direction component (H_{R}).

4. Sanitary wall installation connection box unit according to claim 3, further **characterized in that**
- the fluid line connection interface structure comprises a plurality of fluid line connection interfaces (9a, 9b, 9c, 9d) disposed on a peripheral side on the connector body, and the fluid conduit structure comprises a plurality of associated fluid conduits (10a, 10b, 10c, 10d) between the respective fluid line connection interface and the sanitary component connection contour, and
- the electric line feed-through opening is disposed peripherally between two of the fluid conduits, or the connector body includes a plurality of electric line feed-through openings, with at least one of said openings being disposed between two of the fluid conduits.

5. Sanitary wall installation connection box unit according to claim 4, further **characterized in that** the base portion of the box housing body in the electric line connection region has an outside, blind hole-shaped tube insertion port opening (14) in the sealing resilient material, wherein the tube insertion port opening in longitudinal direction overlapps with the electric line feed-through opening of the connector body, and wherein the closure membrane forms a bottom region of the tube insertion port opening.

6. Sanitary wall installation connection box unit according to claim 5, further **characterized in that** the tube insertion port opening is coaxial to the electric line feed-through opening of the connector body.

7. Sanitary wall installation connection box unit according to claim 5 or 6, further **characterized by** a tube retaining ridge structure (17) made of the sealing resilient material and formed on a peripheral edge (14a) of the tube insertion port opening to project radially inwards.

8. Sanitary wall installation connection box unit according to any one of claims 1 to 7, further **characterized by** a line receiving tube (18) which is provided for receiving an electric line and is inserted with a box-side tube end (18a) into the tube insertion port opening.

9. Sanitary wall installation connection box unit according to any one of claims 1 to 8, further **characterized in that** the connector body is composed of a synthetic or metallic material which has a greater stiffness as compared to the sealing resilient material of the electric line feed-through region of the base portion.

10. Sanitary wall installation connection box unit according to any one of claims 1 to 9, further **characterized in that** the sealing resilient material of the electric line feed-through region of the base portion is a synthetic foamed material, preferably a thermoplastic particle foamed material.

11. Sanitary wall installation connection box unit according to any one of claims 1 to 10, further **characterized in that** the base portion in total is made of the synthetic foamed material, and the connector body is embedded in the synthetic foamed material of the base portion.

## Revendications

1. Unité de boîte de raccordement sanitaire à encastrer dans un mur, comprenant
- un corps de boîtier (1) ayant une portion de base arrière (2) et une portion de douille (3) qui fait saillie de la portion de base vers l'avant et qui entoure circonférentiellement un espace de réception de composant sanitaire (4) accessible par une extrémité frontale avant ouverte (5) de la portion de douille, et
- un corps de raccordement (6) disposé sur la portion de base du corps de boîtier, qui présente un contour de raccordement de composant sanitaire (7) tourné vers l'espace de réception de composant sanitaire, une structure d'interface de raccordement de conduite de fluide (9) accessible sur un côté extérieur (8) du corps de boîtier, une structure de canal de fluide (10) pour la communication fluidique de la structure d'interface de raccordement de conduite de fluide avec le contour de raccordement de composant sanitaire, et au moins une ouverture de passage de ligne électrique (12) menant d'un côté extérieur (6a) du corps de raccordement à travers le corps de raccordement vers l'espace de réception de composant sanitaire,
**caractérisée en ce que**
- la portion de base (2) du corps de boîtier (1) est formée, au moins dans une zone de raccordement de ligne électrique (2a) adjacente à l'ouverture de passage de ligne électrique du corps de raccordement, d'un matériau souple d'étanchéité, et
- l'ouverture de passage de ligne électrique (12) du corps de raccordement (6) est recouverte sur le côté extérieur par un diaphragme d'obturation (13) en le matériau souple d'étanchéité de la zone de passage de ligne électrique de la portion de base (2).

2. Unité de boîte de raccordement sanitaire à encastrer dans un mur selon la revendication 1,
**caractérisée en outre par** une ligne électrique (15) qui est menée à travers une traversée de diaphragme (13a) formée dans le diaphragme d'obturation, sachant qu'au bord de la traversée de diaphragme, le matériau souple d'étanchéité du diaphragme d'obturation s'appuie de manière étanche contre la ligne électrique en exerçant une pression radialement vers l'intérieur.

3. Unité de boîte de raccordement sanitaire à encastrer dans un mur selon la revendication 1 ou 2,
**caractérisée en outre en ce que** le corps de raccordement est de forme annulaire ou cylindrique, et l'ouverture de passage de ligne électrique s'étend circonférentiellement à travers le corps de raccordement en direction radiale ou avec une composante de direction principale (H_{R}) radiale.

4. Unité de boîte de raccordement sanitaire à encastrer dans un mur selon la revendication 3,
**caractérisée en outre en ce que**
- la structure d'interface de raccordement de conduite de fluide comprend une pluralité d'interfaces de raccordement de conduite de fluide (9a, 9b, 9c, 9d) disposées circonférentiellement sur le corps de raccordement, et la structure de canal de fluide comprend une pluralité de canaux de fluide associés (10a, 10b, 10c, 10d) entre l'interface de raccordement de conduite de fluide respective et le contour de raccordement de composant sanitaire, et
- l'ouverture de passage de ligne électrique est disposée circonférentiellement entre deux des canaux de fluide, ou le corps de raccordement présente une pluralité d'ouvertures de passage de ligne électrique, dont au moins une est disposée entre deux des canaux de fluide.

5. Unité de boîte de raccordement sanitaire à encastrer dans un mur selon la revendication 4,
**caractérisée en outre en ce que** la portion de base du corps de boîtier présente, dans la zone de raccordement de ligne électrique, une ouverture d'insertion de tube (14) extérieure en forme de trou borgne dans le matériau souple d'étanchéité, l'ouverture d'insertion de tube chevauchant longitudinalement l'ouverture de passage de ligne électrique du corps de raccordement, et le diaphragme d'obturation formant une zone de fond de l'ouverture d'insertion de tube.

6. Unité de boîte de raccordement sanitaire à encastrer dans un mur selon la revendication 5,
**caractérisée en outre en ce que** l'ouverture d'insertion de tube est disposée coaxialement à l'ouverture de passage de ligne électrique du corps de raccordement.

7. Unité de boîte de raccordement sanitaire à encastrer dans un mur selon la revendication 5 ou 6,
**caractérisée en outre par** une structure de bourrelet de retenue de tube (17) en le matériau souple d'étanchéité, formée sur un bord circonférentiel (14a) de l'ouverture d'insertion de tube et faisant saillie radialement vers l'intérieur.

8. Unité de boîte de raccordement sanitaire à encastrer dans un mur selon l'une des revendications 1 à 7,
**caractérisée en outre par** un tube de réception de ligne (18) qui est conçu pour recevoir une ligne électrique et dont une extrémité de tube (18a) côté boîte est enfichée dans l'ouverture d'insertion de tube.

9. Unité de boîte de raccordement sanitaire à encastrer dans un mur selon l'une des revendications 1 à 8,
**caractérisée en outre en ce que** le corps de raccordement est constitué d'un matériau plastique ou métallique plus rigide que le matériau souple d'étanchéité de la zone de passage de ligne électrique de la portion de base.

10. Unité de boîte de raccordement sanitaire à encastrer dans un mur selon l'une des revendications 1 à 9,
**caractérisée en outre en ce que** le matériau souple d'étanchéité de la zone de passage de ligne électrique de la portion de base est un matériau en mousse plastique, en particulier un matériau en mousse thermoplastique à particules.

11. Unité de boîte de raccordement sanitaire à encastrer dans un mur selon l'une des revendications 1 à 10,
**caractérisé en outre en ce que** la portion de base est formée dans son ensemble par le matériau en mousse plastique, et le corps de raccordement est noyé dans le matériau en mousse plastique de la portion de base.
